(19) Europäisches Patentamt
European Patent Office
Office européen des brevets

(11) **EP 3 611 393 A1**

(12) **EUROPEAN PATENT APPLICATION**
published in accordance with Art. 153(4) EPC

(43) Date of publication:
**19.02.2020 Bulletin 2020/08**

(51) Int Cl.:
**F16C 33/58** (2006.01)   **F16C 33/36** (2006.01)

(21) Application number: **18784803.1**

(86) International application number:
**PCT/JP2018/013061**

(22) Date of filing: **28.03.2018**

(87) International publication number:
**WO 2018/190134 (18.10.2018 Gazette 2018/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.04.2017 JP 2017079212**

(71) Applicant: **NSK Ltd.**
**Tokyo 141-8560 (JP)**

(72) Inventors:
• **MAEDA, Yoshinori**
**Fujisawa-shi**
**Kanagawa 251-8501 (JP)**
• **SUGANUMA, Kentaro**
**Fujisawa-shi**
**Kanagawa 251-8501 (JP)**

(74) Representative: **Grünecker Patent- und Rechtsanwälte**
**PartG mbB**
**Leopoldstraße 4**
**80802 München (DE)**

(54) **TAPERED ROLLER BEARING**

(57)     A tapered roller bearing (10), wherein flange parts (11b, 11c) are provided on one or both ends of an inner ring (11), crowning is provided on both the rolling surface (13a) of the rollers (13) and the raceway surface (11a) of the inner ring (11), and at least at one end of the effective contact length (Le) in the generatrix direction, the amount of crown drop at the raceway surface (11a) of the inner ring (11) is less than the amount of crown drop at the rolling surface (13a) of the rollers (13).

FIG.4

## Description

### Technical Field

The present invention relates to a tapered roller bearing, and particularly relates to a tapered roller bearing used in a speed reducer, a construction machine, a steel industry, an automobile, and the like.

### Background Art

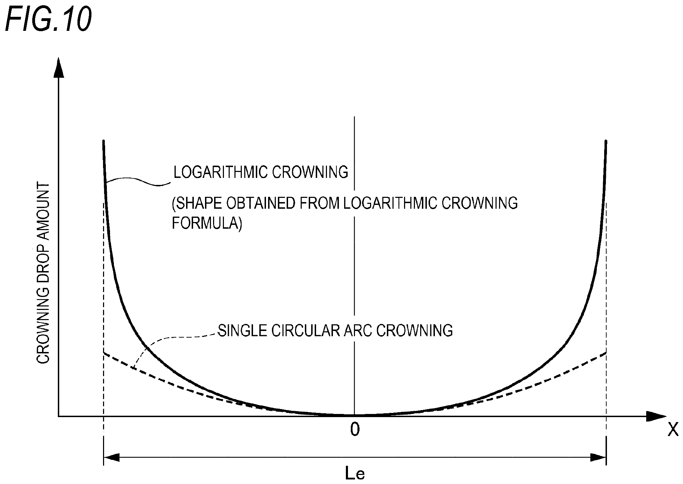

It is conventionally known that, in order to reduce an occurrence of an excessive contact surface pressure, i.e. a so-called edge load at both end portions in an axial direction of a contact portion in a roller bearing, a crowning is formed on a rolling contact surface of a roller or a raceway surface of a raceway ring (see, for example, Patent Document 1).
It is also known that a logarithmic crowning can make a bearing life longer, which does not cause the occurrence of the excessive contact surface pressure, i.e. so-called edge load from a central portion to both end portions in the axial direction of the contact portion with respect to an effective contact length Le in a generatrix direction.
In the meantime, as is apparent from Fig. 10 showing a logarithmic crowning together with a single circular arc crowning, in the logarithmic crowning, a drop amount increases gently from a center toward end portions and increases sharply when approaching the end portions. Therefore, it is difficult to form the logarithmic crowning on the roller or the raceway ring. For this reason, in Patent Document 1, a crowning of a circular arc combination is formed on the roller so as to provide a shape approximate to the logarithmic crowning.
Patent Document 1 also discloses that a sum σ of crowning drop amounts of a roller and an inner ring is designed to satisfy a range of an arbitrary crowning expression (an expression of a load range of $0.4 \times C$ to $0.6 \times C$ with respect to a dynamic load rating C) at two arbitrary points (two points of $0.425 \times Le$ and $0.5 \times Le$ with respect to an effective contact length Le), so as to approach the logarithmic crowning.
Further, in order to actually form crowning on the inner ring, a crowning shape is first processed by grinding, and then processed using a finishing grindstone to obtain a desired surface roughness (which affects a bearing life). Therefore, in finishing processing of the inner ring performed with the grindstone, an SF processing (finishing processing) is performed by moving the grindstone horizontally on the inner ring raceway surface while fitting the grindstone on the crowning, so as to obtain the desired surface roughness. A target shape may also be obtained in the SF processing.
However, in a tapered roller bearing or a cylindrical roller bearing, since a flange part is provided on an outer side in the axial direction of the raceway surface of the inner ring, when finishing processing is performed with the grindstone in order to form the logarithmic crowning on the raceway surface of the inner ring, it is difficult to obtain the desired surface roughness at the end portions of the raceway surface. In addition, in order to obtain the desired surface roughness, a longer time is required until the grindstone fits, so that a cycle time increases, the grindstone is in contact with the flange part, or it is necessary to additionally provide a complicated mechanism as described in Patent Document 2.

### Prior Art Document

### Patent Document

Patent Document 1: JP-A-2001-65574
Patent Document 2: JP-A-2010-17788

### Summary of Invention

### Technical Problem

The present invention has been made in view of the above-described circumstances, and an object thereof is to provide a tapered roller bearing in which finishing processing can be easily performed on a rolling contact surface of a roller and a raceway surface of an inner ring while reducing an increase in cost due to an equipment modification or an increase in cycle time.

### Solution to Problem

The above object of the present invention may be achieved by the following configuration.

(1) A tapered roller bearing includes:

an inner ring and an outer ring; and
a plurality of rollers that are rollably disposed between raceway surfaces of the inner ring and the outer ring,
wherein a flange part is provided at one end portion or both end portions of the inner ring,
wherein crownings are respectively formed on a rolling contact surface of each roller and the raceway surface of the inner ring, and
wherein at least at one end portion of an effective contact length Le in a generatrix direction of the rolling contact surface of each roller and the raceway surface of the inner ring, a crowning drop amount in the raceway surface of the inner ring is smaller than a crowning drop amount in the rolling contact surface of each roller.

(2) In the tapered roller bearing according to (1),
in a range of the effective contact length Le in the generatrix direction of the rolling contact surface of each roller and the raceway surface of the inner ring, a sum of the crowning of the rolling contact surface of each roller and the crowning of the raceway surface of the inner ring is set to be a logarithmic crowning of the following Equation (i) in at least two positions in the generatrix direction respectively,
[Equation 1]

$$\delta = -\frac{w}{\pi \, \mathrm{Le}}\left(\frac{1-\nu_1^{\,2}}{E_1}+\frac{1-\nu_2^{\,2}}{E_2}\right)\ln\left\{1-\left(1-0.3033\frac{2b}{\mathrm{Le}}\right)\left(\frac{2x}{\mathrm{Le}}\right)^2\right\} \quad \cdots \ (\,\mathrm{i}\,)$$

where

$\delta$ is the sum of the crowning drop amounts in a generatrix direction position X of two contacting objects (roller and the raceway surface of the inner ring);
w is a contact load;
Le is the effective contact length in the generatrix direction;
$E_1$, $E_2$ are Young's moduluses of the two contacting objects (roller and the raceways surface of the inner ring);

$\nu_1$, $\nu_2$ are Poisson's ratios of the two contacting objects (roller and the raceways surface of the inner ring); and
b is 1/2 of a Hertz contact width.

(3) In the tapered roller bearing according to (1) or (2),
a central portion of the crowning of at least one of each roller, the inner ring, and the outer ring has a linear shape.
(4) In the tapered roller bearing according to any one of (1) to (3),
a crowning drop amount in a raceway surface of the outer ring is smaller than the crowning drop amount in the raceway surface of the inner ring.

Here, the "effective contact length Le" in the present invention is a length of a region where the rolling contact surface of each roller and the raceway surface of the inner ring actually contact with each other. A specific manner of defining the effective contact length Le will be described later in the description of embodiments.

**Advantageous Effects of Invention**

According to the tapered roller bearing of the present invention, the flange part is provided at one end portion or both end portions of the inner ring, the crownings are respectively formed on the rolling contact surface of each roller and the raceway surface of the inner ring, and at least at one end portion of the effective contact length Le in the generatrix direction, the crowning drop amount in the raceway surface of the inner ring is smaller than the crowning drop amount in the rolling contact surface of each roller. That is, by setting the crowning drop amount of the inner ring, whose end portion of the raceway surface cannot be approached by a grindstone due to the flange part, smaller than the crowning drop amount of the roller, it is possible to reduce an increase in cost due to an equipment modification and an increase in cycle time, and to easily perform finishing processing of the rolling contact surface of each roller and the raceway surface of the inner ring.

**Brief Description of Drawings**

Fig. 1 is a cross-sectional view of a tapered roller bearing according to a first embodiment of the present invention.
Fig. 2 is a side view of the tapered roller bearing illustrated in Fig. 1.
Fig. 3A to Fig. 3F are schematic views at III part of Fig. 1, which illustrate a definition of an effective contact length Le.
Fig. 4 is a graph showing drop amounts of a roller crowning and an inner ring crowning in an X coordinate position.
Fig. 5A is a schematic view illustrating a finishing processing of a raceway surface of the inner ring performed with a grindstone, Fig. 5B is a schematic view at V part of Fig. 5A, which illustrates an example of a case where a drop amount is small, Fig. 5C is a schematic view at V part of Fig. 5A which illustrates an example of a case where the drop amount is large, and Fig. 5D is a schematic view at V part of Fig. 5A, which illustrates an example of a case where the grindstone excessively approaches a flange part.
Fig. 6A is a schematic view illustrating a finishing processing of a rolling contact surface of a roller with a grindstone, Fig. 6B is a schematic view at VI part of Fig. 6A, which illustrates an example of a case where a drop amount is small, Fig. 6C is a schematic view at VI part of Fig. 6A illustrating an example of a case where the drop amount is large, and Fig. 6D is a schematic view at VI part of Fig. 6A illustrating an example of a case where the grindstone excessively approaches the flange part.
Fig. 7 is a graph showing drop amounts of a roller crowning and an inner ring crowning in an X coordinate position in a tapered roller bearing according to a second embodiment of the present invention.
Fig. 8 is a cross-sectional view of a tapered roller bearing according to a modification.
Fig. 9 is a cross-sectional view of a cylindrical roller bearing according to another modification of the present invention.
Fig. 10 is a graph illustrating drop amounts of a logarithmic crowning and a single circular arc crowning in an X coordinate position.

**Description of Embodiments**

Hereinafter, tapered roller bearings according to several embodiments of the present invention will be described in detail with reference to the drawings.

(First Embodiment)

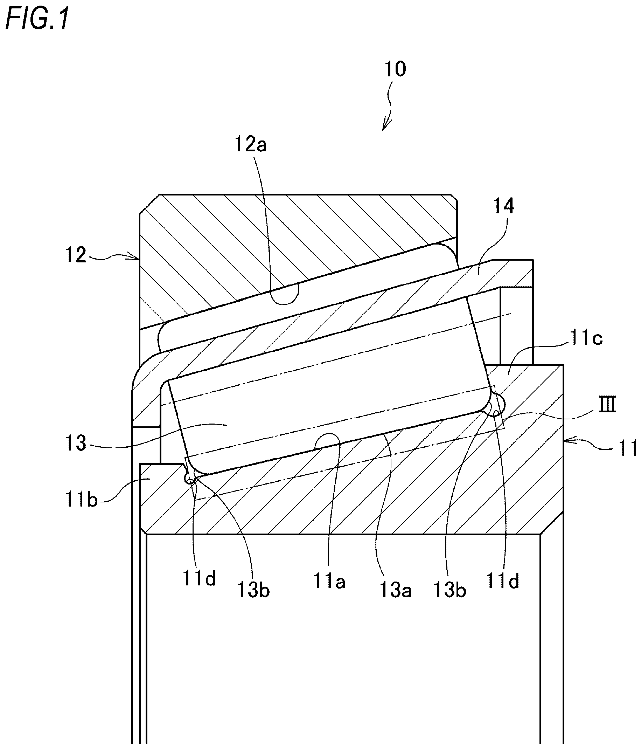

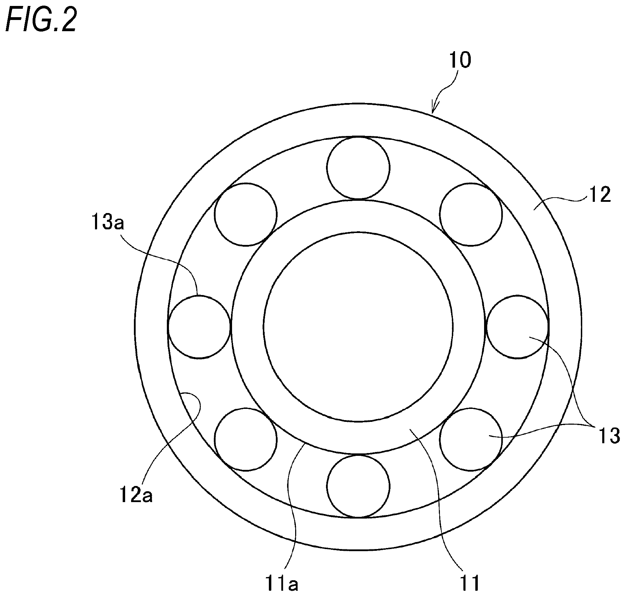

As shown in Fig. 1 and Fig. 2, a tapered roller bearing 10 of the embodiment includes an inner ring 11 which has an inner ring raceway surface 11a on an outer peripheral surface, an outer ring 12 which has an outer ring raceway surface 12a on an inner peripheral surface, a plurality of tapered rollers 13 (hereinafter, simply referred to as "rollers 13".) which are rolling elements disposed between the inner ring raceway surface 11a and the outer ring raceway surface 12a, and a cage 14 which retains the plurality of rollers 13 at predetermined intervals in a circumferential direction.

The inner ring 11 includes a small diameter flange part 11b and a large diameter flange part 11c at a small diameter side axial direction end portion and a large diameter side axial direction end portion of the inner ring raceway surface 11a.

Further, in this embodiment, in order to reduce an occurrence of an edge load, crownings are respectively formed on a rolling contact surface 13a of each roller 13 and the inner ring raceway surface 11a of the inner ring 11, and in the range of an effective contact length Le in a generatrix direction of the rolling contact surface 13a of the tapered roller 13 and the raceway surface of the inner ring 11, a sum of the crownings is set to a logarithmic crowning of the following Equation (i) in at least two positions in the generatrix direction.
[Equation 2]

$$\delta = -\frac{w}{\pi Le}\left(\frac{1-v_1^2}{E_1} + \frac{1-v_2^2}{E_2}\right)\ln\left\{1 - \left(1 - 0.3033\frac{2b}{Le}\right)\left(\frac{2x}{Le}\right)^2\right\} \quad \cdots \quad (\text{i})$$

Here, $\delta$ is the sum of the crowning drop amounts in a generatrix direction position X of two contacting objects (roller and the raceway surface of the inner ring);
w is a contact load;
Le is the effective contact length in the generatrix direction;
$E_1$, $E_2$ are Young's moduluses of the two contacting objects (roller and the raceway surface of the inner ring);
$v_1$, $v_2$ are Poisson's ratios of the two contacting objects (roller and the raceway surface of the inner ring) ; and

b is 1/2 of a Hertz contact width.

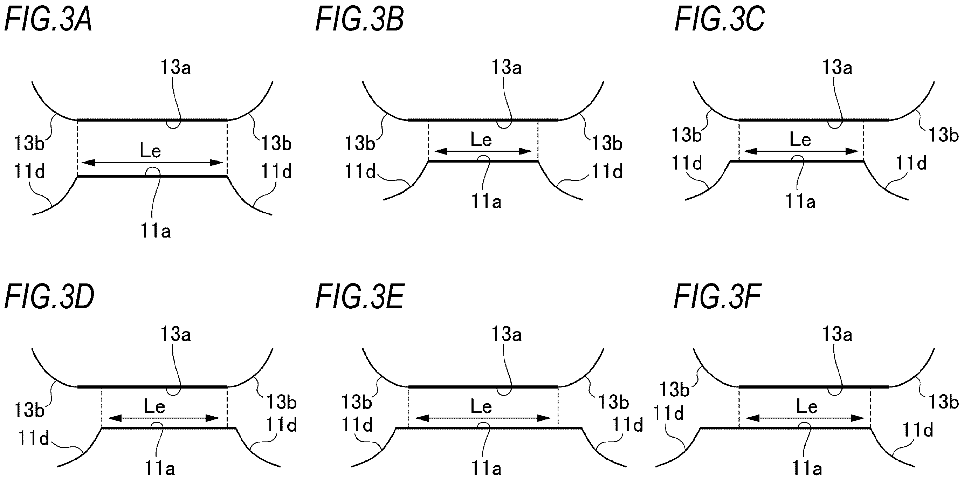

Here, the effective contact length Le is a length of a region where the rolling contact surface 13a of the roller 13 and the raceway surface 11a of the inner ring 11 can actually contact with each other. Specifically, there are several situations as schematically shown in Fig. 3A to Fig. 3F, for example, depending on a difference in length between the rolling contact surface 13a of the roller 13 and the raceway surface 11a of the inner ring 11 and a difference in size between a chamfer 13b of the roller 13 on both sides in the axial direction and a relief groove 11d of the inner ring.

Fig. 3A shows a case where the length of the rolling contact surface 13a of the roller 13 and the length of the raceway surface 11a of the inner ring 11 are the same. In this case, the effective contact length Le is the length of the rolling contact surface 13a of the roller 13 or the raceway surface 11a of the inner ring 11.

Fig. 3B shows a case where the length of the rolling contact surface 13a of the roller 13 is longer than the length of the raceway surface 11a of the inner ring 11, and the raceway surface 13a of the roller 13 extends on both sides in the axial direction outward from both end portions of the raceway surface 11a of the inner ring 11. In this case, the effective contact length Le is the rolling contact surface 13a of the roller 13.

Fig. 3C shows a case where the length of the rolling contact surface 13a of the roller 13 is longer than the length of the raceway surface 11a of the inner ring 11, the raceway surface 11a of the inner ring 11 extends outward on one end side in the axial direction, and the raceway surface 13a of the roller 13 extends outward on the other end side in the axial direction. In this case, the effective contact length Le is an overlapped portion in the axial direction of the length of the rolling contact surface 13a of the roller 13 and the length of the raceway surface 11a of the inner ring 11.

Fig. 3D shows a case where the rolling contact surface 13a of the roller 13 is longer than the raceway surface 11a of the inner ring 11, and the raceway surface 13a of the roller 13 extends outward on one end side in the axial direction, and the raceway surface 11a of the inner ring 11 extends outward on the other end side in the axial direction. In this case, the effective contact length Le is an overlapped portion in the axial direction of the length of the rolling contact surface 13a of the roller 13 and the length of the raceway surface 11a of the inner ring 11.

Fig. 3E shows a case where the raceway surface 11a of the inner ring 11 is longer than the rolling contact surface 13a of the roller 13, and the raceway surface 11a of the inner ring 11 extends on both sides in the axial direction outward from both end portions of the raceway surface 13a of the roller 13. In this case, the effective contact length Le is the rolling contact surface 13a of the roller 13.

Fig. 3F shows a case where the length of the raceway surface 11a of the inner ring 11 is longer than the length of the rolling contact surface 13a of the roller 13, the raceway surface 11a of the inner ring 11 extends outward on one end side in the axial direction, and the raceway surface 13a of the roller 13 extends outward on the other end side in the axial direction. In this case, the effective contact length Le is an overlapped portion in the axial direction of the length of the rolling contact surface 13a of the roller 13 and the length of the raceway surface 11a of the inner ring 11.

It is noted that crowning shapes of the rolling contact surface 13a of the tapered roller 13 and the raceway surface 11a of the inner ring 11 are not shown in Figs. 3A to Fig. 3F.

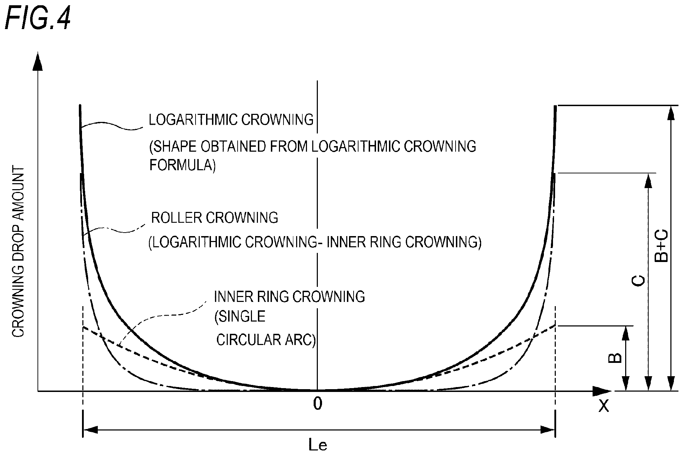

A central position of the crowning shape on the rolling contact surface 13a of the roller 13 coincides with a central position of the crowning shape on the raceway surface 11a of the inner ring 11. The central positions of the crowning shapes are set at arbitrary positions based on the rolling contact surface 13a or the raceway surface 11a. Therefore, the central position of the effective contact length Le and the central positions of the crowning shapes (positions of X = 0 in Fig. 4) do not necessarily coincide with each other.

Further, in this embodiment, for the following reasons, the crowning drop amount in the raceway surface 11a of the inner ring 11 is designed to be smaller than the crowning drop amount in the rolling contact surface 13a of the roller 13 at end portions on both sides of the effective contact length Le in the generatrix direction.

Specifically, as shown in Fig. 4, the raceway surface 11a of the inner ring 11 is a single circular arc crowning, and the rolling contact surface 13a of the roller 13 is a crowning shape having a drop amount C obtained by subtracting a drop amount B of the single circular arc crowning from the sum $\delta$ of the logarithmic crowning given by Equation (i). That is, the arc shape of the crowning formed on the raceway surface 11a of the inner ring 11 is designed such that the drop amount B at end portions on both sides of the effective contact length Le is smaller than the drop amount C of the raceway surface 13a of the roller 13 when the drop amounts of both the raceway surfaces 11a and 13a in a middle portion in the axial direction of the effective contact length Le are zero.

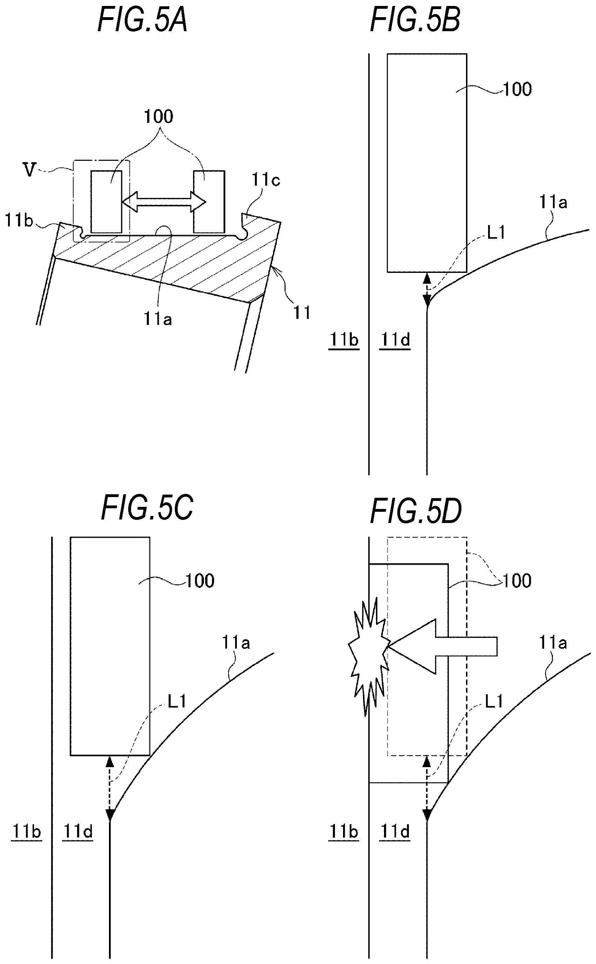

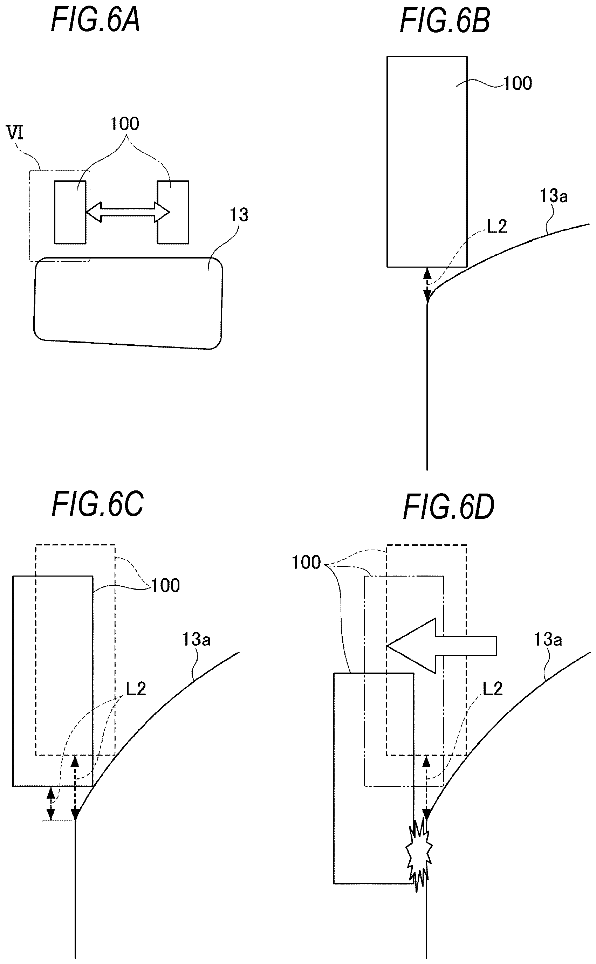

Hereinafter, a difference in a fitting time of a grindstone 100 during finishing processing due to the difference in the drop amount at the end portions of the inner ring raceway surface 11a or the rolling contact surface 13a will be described below referring to Figs. 5A to 5D and Figs. 6A to 6D.

As shown in Fig. 5A, the finishing processing of the inner ring 11 is performed with the grindstone 100 by moving the grindstone 100 horizontally (along the generatrix direction) on the inner ring raceway surface 11a so as to provide a desired surface roughness while fitting the grindstone 100 to the crowning shape.

At this time, in a case where the drop amount is large as shown in Fig. 5C, a distance L1 between the end portion of the inner ring raceway surface 11a and the grindstone 100 is farther than that in a case where the drop amount is small as shown in Fig. 5B, and therefore, the time (fitting time) until the grindstone 100 comes into contact with the end portion due to wearing of the grindstone 100 is required longer, so that a cycle time increases. In the drawing, a reference numeral 11d schematically represents a relief groove between the inner ring raceway surface 11a and the flange part 11b.

In order to reduce the cycle time, the distance between the flange part 11b and the grindstone 100 is desired to be reduced as much as possible. However, as shown in Fig. 5D, when the grindstone 100 excessively approaches the flange part 11b, the grindstone 100 comes into contact with the flange part 11b. Therefore, management of the grindstone 100 is important in the finishing processing of the inner ring 11, and the drop amount is better small when considering the processing cost.

In the meantime, as shown in Fig. 6A, the finishing processing of the roller 13 is also performed with the grindstone 100 by moving the grindstone 100 horizontally (along the generatrix direction) on the rolling contact surface 13a so as to provide a desired surface roughness while fitting the grindstone 100 to the crowning.

In the case of finishing processing of the roller 13, since no flange part is provided unlike the inner ring 11, as shown in Fig. 6C, the grindstone 100 can approach the end portion of the roller 13 such that the distance L2 between the end portion of the rolling contact surface 13a and the grindstone 100 is shortened, and processing can be performed more easily as compared with a case where the drop amount of the inner ring 11 is large as shown in Fig. 5C.

However, when the grindstone 100 excessively approaches the end portion of the roller 13 as shown in Fig. 6D, the grindstone 100 cannot return from the rolling contact surface 13a of the roller 13, so that the grindstone breaks or the machine is damaged, and thus a sufficient margin is necessary to prevent the grindstone 100 from slipping off.

Considering the processing cost, since the management becomes complicated similarly to the inner ring 11 if the drop amount is large, the drop amount is better small. However, even if the drop amount is large, the roller 13 can be more easily processed than the inner ring 11 since the roller 13 can approach the end portions more easily as compared with the inner ring 11.

Therefore, in this embodiment, instead of realizing the logarithmic crowning with either one of the roller 13 or the inner ring 11 of the tapered roller bearing 10 alone, as shown in Fig. 4, in consideration of cost and processability, the logarithmic crowning is obtained with the combination of the drop amounts of the roller crowning and the inner ring crowning, and the crowning drop amount in the inner ring raceway surface 11a is set smaller than the crowning drop amount in the rolling contact surface 13a of the roller 13 at the end portions on both sides of the effective contact length Le.

Further, in this embodiment, since the logarithmic crowning is realized by the sum $\delta$ of the drop amounts of the roller 13 and the inner ring 11, the drop amount of the roller 13 is small, so that if crowning is not formed on the outer ring 12 as well, the drop amount of the outer ring 12 is insufficient. Therefore, it is expected that the outer ring 12 has a short life.

It is assumed a case where a logarithmic crowning is also formed with the roller 13 and the outer ring 12 similarly to the inner ring 11. A contact state on the circumference as shown in Fig. 2, the inner ring 11 and the roller 13 have a convex-convex relationship, while the outer ring 12 and the roller 13 have a concave-convex relationship. Therefore, it is assumed that the outer ring 12 would have a lower surface pressure at the same crowning drop amounts.

As described above, since the processing of the crowning is easier when the drop amount is smaller, the processing cost can be reduced by omitting the crowning of the outer ring 12, or forming a crowning having a smaller drop amount than the inner ring 11, on the outer ring 12 (crowning drop amount: the inner ring > the outer ring).

The outer ring 12 may have a linear shape without forming a crowning.

In addition, the drop amounts in vicinity of the central portions of the crowning of the roller 13, the inner ring 11, and the outer ring 12 are small, and have little difference from a linear shape. Therefore, the central portion of the crowning of at least one of the roller 13, the inner ring 11, and the outer ring 12 may have a linear shape.

As described above, according to the tapered roller bearing 10 of the embodiment, the flange parts 11b and 11c are provided at both end portions of the inner ring 11, crownings are respectively formed on the rolling contact surface 13a of the roller 13 and the raceway surface 11a of the inner ring 11, and at end portions on both sides of the effective contact length Le in the generatrix direction, the crowning drop amount in the raceway surface 11a of the inner ring 11 is set smaller than the crowning drop amount in the rolling contact surface 13a of the roller 13. Accordingly, by setting the crowning drop amount of the inner ring 11, which cannot approach the end portion due to the flange parts 11b and 11c, smaller than the crowning drop amount of the roller 13, it is possible to reduce an increase in cost due an equipment modification and an increase in cycle time, and to easily perform finishing processing of the rolling contact surface 13a of the roller 13 and the raceway surface 11a of the inner ring 11.

Further, in the embodiment, since the logarithmic crowning of the above Equation (i) is realized by the sum $\delta$ of the crowning drop amount of the rolling contact surface 13a of the roller 13 and the crowning drop amount of the raceway surface 11a of the inner ring 11, it is possible to realize a long life of the bearing while keeping the processing cost low.

In the embodiment described above, in order to reduce the increase in cost as much as possible, the crowning drop amount in the raceway surface 11a of the inner ring 11 is set smaller than the crowning drop amount in the rolling contact surface 13a of the roller 13 at end portions on both sides of the effective contact length Le in the generatrix direction. However, from a viewpoint of reducing the increase in cost, the crowning drop amount of the raceway surface 11a of the inner ring 11 may be set smaller than the crowning drop amount of the rolling contact surface 13a of the roller 13 at least at one end portion of the effective contact length Le in the generatrix direction.

(Second Embodiment)

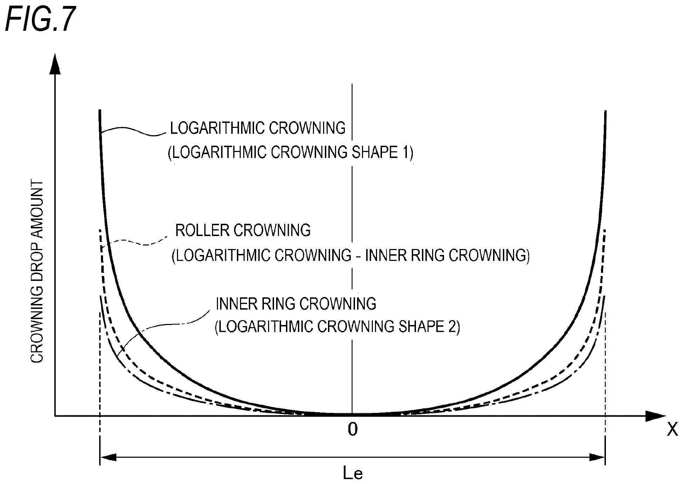

Next, a tapered roller bearing according to a second embodiment of the present invention will be described with reference to Fig. 7. In the embodiment, the crowning shapes of the raceway surface of the inner ring and the outer ring and the rolling contact surface of the roller are different from those of the first embodiment. Other configurations are similar to those of the first embodiment.

That is, in this embodiment, the raceway surface 11a of the inner ring 11 is a logarithmic crowning having a small drop amount as shown in Fig. 7 instead of the single circular arc crowning of the first embodiment. In addition, in this case, the rolling contact surface 13a of the roller 13 has a crowning shape obtained by subtracting the drop amount of the logarithmic crowning of the inner ring raceway surface 11a from the sum $\delta$ of the logarithmic crowning given by the above Equation (i).

Further, in this case, the crowning drop amount of the inner ring crowning on the raceway surface 11a of the inner ring 11 is smaller than the crowning drop amount of the rolling contact surface 13a of the roller 13 over the entire effective contact length Le in the generatrix direction.

Similarly to the first embodiment, the raceway surface 12a of the outer ring 12 also has a crowning shape or a linear shape.

Therefore, also in this embodiment, by making the drop amount of the inner ring 11, which cannot approach the end portion of the raceway surface due to the flange part, smaller than the drop amount of the roller, it is possible to omit an equipment modification and reduce an increase in cycle time, and to easily perform finishing processing of the rolling contact surface 13a of the roller 13 and the inner ring raceway surface 11a without increasing the cost.

Other configurations and operations are similar to those of the first embodiment.

The present invention is not limited to the above-described embodiments, and can be appropriately modified, improved, or the like.

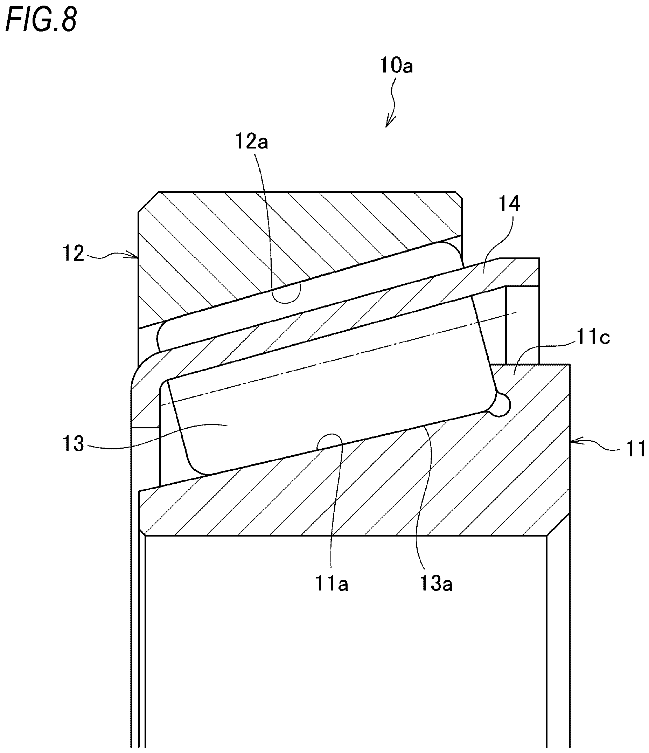

For example, although the flange parts 11b and 11c may be provided at both end portions of the inner ring 11 in the above embodiment, the flange part may be provided only at one end portion. For example, the inner ring 11 may only have a large diameter flange part 11c as in the tapered roller bearing 10a shown in Fig. 8. In particular, in this case, the crowning drop amount of the raceway surface 11a of the inner ring 11 is set smaller than the crowning drop amount of the rolling contact surface 13a of the roller 13 at least at one end portion of the effective contact length Le, which is the side having the large diameter flange 11c.

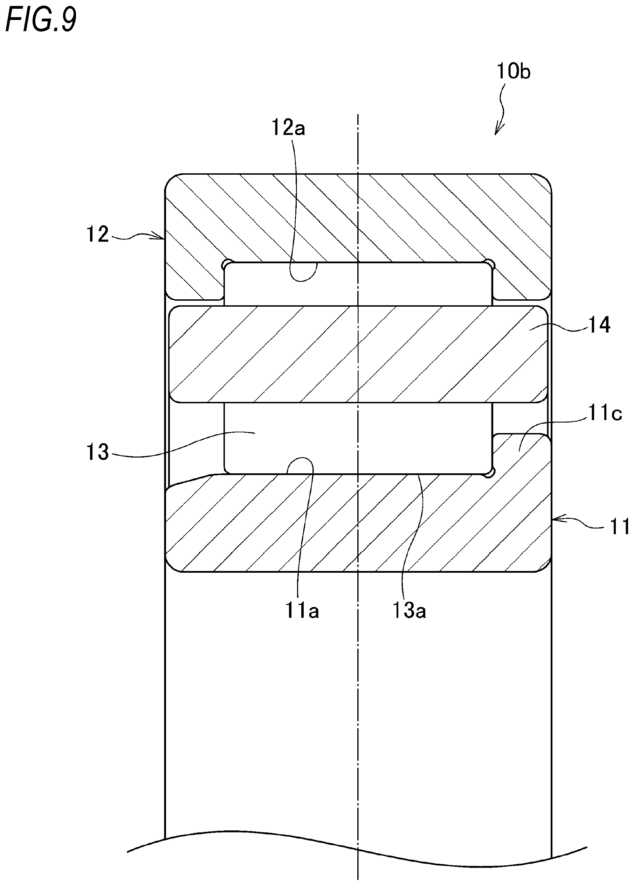

Further, although the tapered roller bearing has been described in the above embodiment, the present invention is also applicable to a cylindrical roller bearing in which the same problem exists. That is, for example, the cylindrical roller bearing 10b shown in Fig. 9 also includes an inner ring 11, an outer ring 12, a plurality of rollers 13 which are rollably disposed between the raceway surfaces 11a and 12a of the inner ring 11 and the outer ring 12, and a cage 14 which retains the plurality of rollers 13 at predetermined intervals in the circumferential direction. In Fig. 9, the flange part 11c is provided at one end portion of the inner ring 11, however, the flange part may also be provided at both end portions of the inner ring 11.

Also in such a cylindrical roller bearing, the crowning formed on any of the rolling contact surface 13a of the roller 13 and the raceway surface 11a of the inner ring 11 can be configured similarly to the tapered roller bearing described above, and the similar effect to that of the tapered roller bearing can be obtained.

That is, an embodiment of the present invention provides a cylindrical roller bearing including: an inner ring and an outer ring; and a plurality of rollers that are rollably disposed between raceway surfaces of the inner ring and the outer ring, wherein a flange part is provided at one end portion or both end portions of the inner ring, crownings are respectively formed on a rolling contact surface of each roller and the raceway surface of the inner ring, and at least at one end portion of an effective contact length Le in a generatrix direction of the rolling contact surface of each roller and the raceway surface of the inner ring, a crowning drop amount in the raceway surface of the inner ring is smaller than a crowning drop amount in the rolling contact surface of each roller.

In addition, in a range of the effective contact length Le in the generatrix direction of the rolling contact surface of each roller and the raceway surface of the inner ring, a sum of the crowning of the rolling contact surface of each roller and the crowning of the raceway surface of the inner ring is set to be a logarithmic crowning of the following Equation (i) in at least two positions in the generatrix direction respectively.

[Equation 3]

$$\delta = -\frac{w}{\pi Le}\left(\frac{1-\nu_1^2}{E_1}+\frac{1-\nu_2^2}{E_2}\right)\ln\left\{1-\left(1-0.3033\frac{2b}{Le}\right)\left(\frac{2x}{Le}\right)^2\right\} \quad \cdots \text{( i )}$$

Here:

$\delta$ is the sum of the crowning drop amounts in a generatrix direction position X of two contacting objects (roller and the raceway surface of the inner ring);
w is a contact load;
Le is the effective contact length in the generatrix direction;
$E_1$, $E_2$ are Young's moduluses of the two contacting objects (roller and the raceway surface of the inner ring);
$\nu_1$, $\nu_2$ are Poisson's ratios of the two contacting objects (roller and the raceway surface of the inner ring); and
b is 1/2 of a Hertz contact width.

Accordingly, the logarithmic crowning is realized by the sum of the crowning drop amounts of crowning at the effective contact length Le in the generatrix line direction of the rolling contact surface of the roller and the raceway surface of the inner ring. Also, by setting crowning drop amount of the inner ring, which cannot approach the end portion of the raceway surface due to the flange part, smaller than the crowning drop amount of the roller, it is possible to reduce an increase in cost due to an equipment modification and an increase in cycle time, and to easily perform finishing processing of the rolling contact surface of the roller and the raceway surface of the inner ring.

In addition, in an embodiment of the cylindrical roller bearing of the present invention, similarly to the tapered roller bearing of the above embodiment, a central portion of the crowning of at least one of the roller, the inner ring, and the outer ring may have a linear shape.

Further, in an embodiment of the cylindrical roller bearing of the present invention, similarly to the tapered roller bearing of the first embodiment, the crowning drop amount in the raceway surface of the outer ring may be smaller than the crowning drop amount in the raceway surface of the inner ring.

In addition, in an embodiment of the cylindrical roller bearing of the present invention, the crowning shape of the raceway surface of the inner ring may be a single circular arc crowning or a logarithmic crowning, similarly to the tapered roller bearings of the first and the second embodiments.

The present application is based on Japanese patent application No. 2017-79212, filed on April 12, 2017, and contents of which are incorporated herein by reference.

**Reference Signs List**

10, 10a tapered roller bearing
10b cylindrical roller bearing
11 inner ring
11a inner ring raceway surface
11b small diameter flange part (flange part)
11c large diameter flange part (flange part)
12 outer ring
12a outer ring raceway surface
13 tapered roller (roller)
13a rolling contact surface
100 grindstone

**Claims**

**1.** A tapered roller bearing comprising:

an inner ring and an outer ring; and
a plurality of rollers that are rollably disposed between raceway surfaces of the inner ring and the outer ring,
wherein a flange part is provided at one end portion or both end portions of the inner ring,
wherein crownings are respectively formed on a rolling contact surface of each roller and the raceway surface of the inner ring, and

wherein at least at one end portion of an effective contact length Le in a generatrix direction of the rolling contact surface of each roller and the raceway surface of the inner ring, a crowning drop amount in the raceway surface of the inner ring is smaller than a crowning drop amount in the rolling contact surface of each roller.

2. The tapered roller bearing according to claim 1,

wherein in a range of the effective contact length Le in the generatrix direction of the rolling contact surface of each roller and the raceway surface of the inner ring, a sum of the crowning of the rolling contact surface of each roller and the crowning of the raceway surface of the inner ring is set to be a logarithmic crowning of the following Equation (i) in at least two positions in the generatrix direction respectively,

[Equation 1]

$$\delta = -\frac{w}{\pi \, \text{Le}} \left( \frac{1 - \nu_1^2}{E_1} + \frac{1 - \nu_2^2}{E_2} \right) \ln \left\{ 1 - \left( 1 - 0.3033 \frac{2b}{\text{Le}} \right) \left( \frac{2x}{\text{Le}} \right)^2 \right\} \quad \cdots \quad (\text{i})$$

where

$\delta$ is the sum of the crowning drop amounts at a generatrix direction position X of two contacting objects (roller and the raceway surface of the inner ring);

w is a contact load;

Le is the effective contact length in the generatrix direction;

$E_1$, $E_2$ are Young's moduluses of the two contacting objects (roller and the raceway surface of the inner ring);

$\nu_1$, $\nu_2$ are Poisson's ratios of the two contacting objects (roller and the raceway surface of the inner ring); and

b is 1/2 of a Hertz contact width.

3. The tapered roller bearing according to claim 1 or 2,

wherein a central portion of the crowning of at least one of each roller, the inner ring, and the outer ring has a linear shape.

4. The tapered roller bearing according to any one of claims 1 to 3,

wherein a crowning drop amount in the raceway surface of the outer ring is smaller than the crowning drop amount in the raceway surface of the inner ring.

FIG.1

*FIG.2*

*FIG.3A*

13a

13b
11d

Le

13b
11d

11a

*FIG.3B*

13a

13b
11d

Le

13b
11d

11a

*FIG.3C*

13a

13b
11d

Le

13b
11d

11a

*FIG.3D*

13a

13b
11d

Le

13b
11d

11a

*FIG.3E*

13a

13b
11d

Le

13b
11d

11a

*FIG.3F*

13a

13b
11d

Le

13b
11d

11a

EP 3 611 393 A1

## FIG.4

LOGARITHMIC CROWNING
(SHAPE OBTAINED FROM LOGARITHMIC CROWNING FORMULA)

ROLLER CROWNING
(LOGARITHMIC CROWNING- INNER RING CROWNING)

INNER RING CROWNING
(SINGLE
CIRCULAR ARC)

CROWNING DROP AMOUNT

Le

## FIG.5A

## FIG.5B

## FIG.5C

## FIG.5D

## FIG.6A

## FIG.6B

## FIG.6C

## FIG.6D

FIG.7

FIG.8

FIG.9

## FIG.10

LOGARITHMIC CROWNING
(SHAPE OBTAINED FROM LOGARITHMIC CROWNING FORMULA)

SINGLE CIRCULAR ARC CROWNING

CROWNING DROP AMOUNT

0

X

Le

## INTERNATIONAL SEARCH REPORT

| | International application No. |
| --- | --- |
| | PCT/JP2018/013061 |

**A. CLASSIFICATION OF SUBJECT MATTER**
Int.Cl. F16C33/58(2006.01)i, F16C33/36(2006.01)i

According to International Patent Classification (IPC) or to both national classification and IPC

**B. FIELDS SEARCHED**

Minimum documentation searched (classification system followed by classification symbols)
Int.Cl. F16C33/58, F16C33/36

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2007-170417 A (NTN CORPORATION) 05 July 2007, paragraphs [0007], [0013]-[0019], fig. 3-10 (Family: none) | 1-4 |
| Y | JP 2016-89954 A (NSK LTD.) 23 May 2016, paragraphs [0012], [0019], [0021], fig. 1-2 (Family: none) | 1-4 |
| Y | JP 2001-65574 A (NSK LTD.) 16 March 2001, paragraphs [0003]-[0005] & US 6390685 B1, column 1, lines 24-50 & DE 10042901 A1 | 2-4 |

☒ Further documents are listed in the continuation of Box C.　　☐ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 June 2018 (15.06.2018) | 26 June 2018 (26.06.2018) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/013061

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2014-231902 A (NSK LTD.) 11 December 2014, paragraph [0023], fig. 2 & CN 203516458 U | 4 |

Form PCT/ISA/210 (continuation of second sheet) (January 2015)

**EP 3 611 393 A1**

## REFERENCES CITED IN THE DESCRIPTION

**Patent documents cited in the description**

- JP 2001065574 A
- JP 2010017788 A
- JP 2017079212 A